# EUROPÄISCHE PATENTSCHRIFT

(11) **EP 1 354 856 B1**
(45) Veröffentlichungstag und Bekanntmachung des Hinweises auf die Patenterteilung: **02.11.2005**
(21) Anmeldenummer: 03008231.7
(22) Anmeldetag: 09.04.2003
(51) Int. Cl.: C02F 1/16, C02F 9/00

(54) **Verfahren zur Wasseraufbereitung und Verteilung von bordgeneriertem Wasser in Luft-, Land- und/oder Wasserfahrzeugen**
Process for the recovery and distribution of water generated on board an aircraft, land based vehicle and/or watercraft
Procédé de traitement et distribution d'eau génerée à bord d'un véhicule aérien, terrestre et/ou aquatique

(30) Priorität: 16.04.2002 DE 10216709
(43) Veröffentlichungstag der Anmeldung: 22.10.2003
(73) Patentinhaber: Airbus Deutschland GmbH, 21129 Hamburg (DE)
(72) Erfinder: Hoffjann, Claus, 21629 Neu-Wulmstorf (DE); Heinrich, Hans-Jürgen, 22609 Hamburg (DE)
(74) Vertreter: Hansmann, Dierk

(56) Entgegenhaltungen:
- EP-A- 0 634 563
- DE-A- 19 821 952
- US-A- 4 871 452
- US-A- 5 005 787
- US-A- 6 143 185
- PATENT ABSTRACTS OF JAPAN vol. 011, no. 115 (C-415), 10. April 1987 (1987-04-10) & JP 61 259795 A (BABCOCK HITACHI KK), 18. November 1986 (1986-11-18)

## Beschreibung

Die Erfindung betrifft ein Verfahren zur Wasseraufbereitung und Verteilung von bordgeneriertem Wasser in Luft-, Land- und/oder Wasserfahrzeugen, welches vorzugsweise auch in autonomen stationären Einrichtungen zur Anwendung kommen kann.

Speziell in Luftfahrzeugen aber auch an Bord von Wasser- oder Landfahrzeugen sowie bei autonomen stationären Einrichtungen lässt sich Wasser z. B. durch den Einsatz von Brennstoffzellen oder einen anderen geeigneten Prozess gewinnen (vgl. z.B. die Druckschriften EPO 634563 und DE 19 821 952). Das aus Brennstoffzellen oder einem anderen Prozess gewonnene Wasser muss für die Verwendung in WC-Spülungen, als Trinkwasser, Duschwasser, Waschwasser und zur Luftbefeuchtung in Klimaanlagen jeweils unterschiedliche Wasserqualitäten aufweisen:
- Trinkwasser muss für den menschlichen Verzehr geeignet sein und den Anforderungen nationaler und internationaler Trinkwasserverordnungen entsprechen.
- Duschwasser und Waschwasser muss ebenfalls Trinkwasserqualität gemäss den Anforderungen nationaler und/oder internationaler Trinkwasserverordnungen entsprechen, da dieses Wasser u. U. ebenfalls in den menschlichen Körper gelangen kann.
- Wasser zur Luftbefeuchtung in Klimaanlagen muss keimfrei, frei von Fungien und zur Vermeidung von Ablagerungen möglichst entsalzen sein.
- Wasser für WC-Spülungen sollte keimfrei und zur Vermeidung von Ablagerungen weitgehend entsalzen sein.

Der Erfindung liegt die Aufgabe zugrunde, ein Verfahren der eingangs genannten Art zu schaffen, mit dem unterschiedliche Wasserqualitäten unter bestimmten Voraussetzungen an verschiedenen Stellen eines Aufbereitungsprozesses abgeleitet werden können.

Bei dem erfindungsgemäßen Verfahren zur Wasseraufbereitung und Verteilung von bordgeneriertem Wasser in Luft-, Land- und/oder Wasserfahrzeugen, vorzugsweise auch in autonomen stationären Einrichtungen, wird die Aufgabe unter Verwendung eines kombinierten Prozesses aus Hochtemperatur-Brennstoffzelle und Turbine im Temperaturbereich > 500°C, mit einem direkt in die Brennstoffzelle integrierten und mit der Brennstoffzellen-Prozesswärme betriebenen Reformerprozess zur Verwendung von Kohlenwasserstoffen als Brennstoff sowie einer Zudosierung von Grau- und/oder Frischwasser und einem mit der Prozesswärme der Brennstoffzelle betriebenen Wasserpurifikationsprozesses sowie einer Wasserverteilung und einer selbstregulierenden Wasseraufsalzungseinheit gelöst.

Erfindungsgemäße Ausgestaltungen des Verfahrens sind in den Unteransprüchen 2 bis 29 beschrieben.

Das Verfahren beruht auf einem mehrstufigen Wasserherstellungs- und Nachbereitungsprozess mit Wassererzeugung, Wasseraufbereitung, Wasserverteilung und Wasseraufsalzung. Eine erfindungsgemäße Anordnung zur Durchführung des Verfahrens besteht im wesentlichen aus folgenden Komponenten:
- Wasserherstellung
   Bei einem Wasserherstellungsprozess unter Verwendung von Brennstoffzellen, ist eine absolut keimfreie Wasserqualität dadurch garantiert ist, dass in den Brenngasen und somit auch im Endprodukt verfahrensbedingt keinerlei Keime enthalten sind. Hierfür wird erfindungsgemäß eine Hochtemperatur-Brennstoffzelle eingesetzt.
- Purifikation
   Prozess zur Aussonderung von unerwünschten Inhaltsstoffen aus dem Wasser. Hierzu wird erfindungsgemäß ein Verdampferprozess und ein nachgeschalteter Aktivkohle-Filtrationsprozess eingesetzt. Der Verdampferprozess wird mit der Abwärme der Hochtemperatur-Brennstoffzelle betrieben. Die Aktivkohlefilter werden wechselseitig über die Abwärme der Hochtemperatur-Brennstoffzelle regeneriert.
- Wasserverteilung
   Das nach dem Purifikationsprozess zur Verfügung stehende Wasser wird in einem Behälter gepuffert und danach in die Systeme für die Luftbefeuchtung/Klimatisierung, WC-Spülung und Trinkwasser/Duschwasser/Waschwasser verteilt.
- Wasseraufsalzung
   Trinkwasser, Dusch- und Waschwasser werden über eine Zudosierungseinheit mit denen für den menschlichen Gebrauch benötigten Salzen aufbereitet. Ein nachgeschaltetes Meßverfahren, welches mit der Zudosierungseinheit rückgekoppelt ist, garantiert zu jedem Zeitpunkt einwandfreie Wasserqualität. Die Zudosierung von Salzen erfolgt automatisch und mengenabhängig.

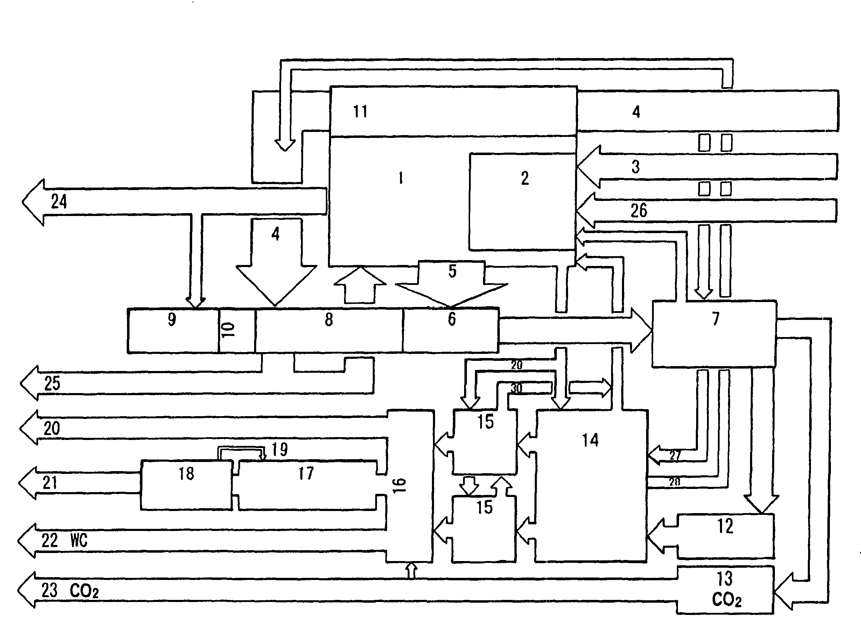

In der Zeichnung ist ein Ausführungsbeispiel einer Anordnung zur Durchführung des erfindungsgemäßen Verfahrens dargestellt, und zwar zeigt die einzige Figur eine Anordnung zur Wassergenerierung mittels Hochtemperatur-Brennstoffzellen als Hilfsaggregat (APU). Bei dieser Anordnung ist die Abwärme der Hochtemperatur-Brennstoffzelle in einer oder mehreren Gasturbinen, ggfs. auch in Stirlingmotoren oder in anderen Wärme-Kraftmaschinen nutzbar. Auf diese Weise lässt sich direkt Druckluft erzeugen, welche entweder für die Druckluftbeaufschlagung und Klimatisierung einer Flugzeugkabine oder für den Triebwerksstart eines Flugzeuges zur Verfügung stehen kann. Zusätzlich können Hydraulikpumpen angeschlossen werden, welche die Notversorgung des Hydrauliksystems übernehmen. Hierzu muss für die Brennstoffzellen ein Notfall-Treibstoffvolumen bereit stehen, welches z.B. aus in Flaschen mitgeführtem Methan (Erdgas) bestehen kann. Die erforderlichen Redundanzen erhält man aus der Anzahl der eingesetzten Brennstoffzellensysteme.

Die erforderlichen Aufbereitungsprozesse für das Grau- bzw. Schwarzwasser werden in dieser Anordnung über die Abwärme der Brennstoffzelle betrieben. Ein zusätzlicher Vorteil findet sich in der weitgehenden Verwertung von dem in Schwarzwassermengen enthaltenen Wasseranteil und der zusätzlich damit verbundenen Gewichtsreduzierung. Die generierte Wassermenge ist in variablen Mengenanteilen abrufbar und hoch genug für zusätzliche Anwendungen in der Klimaanlage (zum Zweck der Luftbefeuchtung) und in Duschen (für die Warm- und Kaltwasser-Bereitstellung). Der Hauptvorteil dieses Systems liegt in der deutlich höheren Effizienz der Hochtemperatur-Brennstoffzelle in Verbindung mit einem Gasturbinenprozess und der Unanfälligkeit gegenüber Kohlenmonoxid und Trebstoffqualitäten.

## Patentansprüche

1. Verfahren zur Wasseraufbereitung und Verteilung von bordgeneriertem Wasser in Luft-, Land- und/oder Wasserfahrzeugen, welches vorzugsweise auch in autonomen stationären Einrichtungen zur Anwendung kommen kann, unter Verwendung eines kombinierten Prozesses aus Hochtemperatur-Brennstoffzelle (1) und Turbine im Temperaturbereich > 500°C, mit einem direkt in die Brennstoffzelle integrierten und mit der Brennstoffzellen Prozesswärme betriebenen Reformerprozess (2) zur Verwendung von Kohlenwasserstoffen als Brennstoff sowie einer Zudosierung von Grau- und/oder Frischwasser (26) und einem mit der Prozesswärme der Brennstoffzelle betriebenen Wasserpurifikationsprozesses (14, 15) sowie einer Wasserverteilung (20, 21, 22) und einer selbstregulierenden Wasseraufsalzungseinheit (17).

2. Verfahren nach Anspruch 1, **dadurch gekennzeichnet, dass** zur Wassererzeugung eine Hochtemperatur-Brennstoffzelle (1) der Typen Oxidkeramik-Brennstoffzelle (SOFC) oder Schmelzkarbonat-Brennstoffzelle (MCFC) oder ein im Temperaturspektrum vergleichbarer Typ eingesetzt wird.

3. Verfahren nach Anspruch 1 oder 2, **dadurch gekennzeichnet, dass** der Hochtemperatur-Brennstoffzelle (1) ein Kondensationsprozess (6, 7) des Abgases (5) nachgeschaltet wird, der Wasser aus den Abgasen der Brennstoffzelle auskondensiert.

4. Verfahren nach Anspruch 1, 2 oder 3, **dadurch gekennzeichnet, dass** mindestens eine Stufe des Kondensationsprozesses aus einer Turbine mit einer oder mehreren Turbinenstufen (6) bzw. aus einer oder mehreren voneinander getrennten Turbinen mit beliebiger Anzahl von Turbinenstufen besteht.

5. Verfahren nach Anspruch 1, 2 oder 3, **dadurch gekennzeichnet, dass** mindestens eine Stufe des Kondensationsprozesses mit einem einer Turbine nachgeschalteten Wärmetauscher (7) ausgeführt wird.

6. Verfahren nach Anspruch 1, 2, 3 oder 5, **dadurch gekennzeichnet, dass** als Kühlmedium (27, 28) des Wärmetauschers (7) einer der beiden in der Brennstoffzelle verwendeten Brennstoffe (z. B. Luft 4) verwendet wird.

7. Verfahren nach Anspruch 1 oder 2, **dadurch gekennzeichnet, dass** mindestens einer der beiden in der Brennstoffzelle(1) verwendeten Brennstoffe (3, 4) (z. B. Luft), durch die Prozesswärme der Brennstoffzelle vorgewärmt wird und/oder flüssig zugeführte Treibstoffanteile verdampft werden.

8. Verfahren nach Anspruch 1, 2 oder 7 **dadurch gekennzeichnet, dass** die Vorwärmung der Brennstoffe in einem Brennstoffzellen-Kühler (11) erfolgt, der die Brennstoffzelle teilweise oder vollständig umschließt.

9. Verfahren nach Anspruch 1 oder 2, **dadurch gekennzeichnet, dass** der interne Reformerprozess (2) zur Brennstoffaufbereitung so ausgelegt ist, dass mit der Prozesswärme der Hochtemperatur Brennstoffzelle (1) atomarer bzw. molekularer Wasserstoff erzeugt wird, der einerseits in der Hochtemperatur Brennstoffzelle (1) selbst zur Energie- und Wassererzeugung verwendet wird und/oder teilweise abgeleitet wird und z. B. über einen Molekularfilter einem andersartigen Verbraucher (beispielsweise einer Membran Brennstoffzelle (PEMFC)) zugeführt wird.

10. Verfahren nach Anspruch 1, 2 oder 9, **dadurch gekennzeichnet, dass** dem internen Reformerprozess (2) statt Grauwasser (26) auch Frischwasser zugeführt wird, welches entweder extem zur Verfügung gestellt oder aus dem Brennstoffzellenkondensat entnommen wird.

11. Verfahren nach Anspruch 1, 2 oder 4 **dadurch gekennzeichnet, dass** eine oder mehrere Turbinenstufen mit einem Druckluftkompressor (8) gekoppelt werden.

12. Verfahren nach Anspruch 1, 2 oder 11 **dadurch gekennzeichnet, dass** der Druckluftkompressor (8) auch mit einem Motor (9) betrieben wird.

13. Verfahren nach Anspruch 1, 2 oder 12 **dadurch gekennzeichnet, dass** der Motor (9) über eine Kupplung (10) mit dem Druckluftkompressor (8) verbunden wird.

14. Verfahren nach Anspruch 1 oder 2, **dadurch gekennzeichnet, dass** der Brennstoff (3) ebenfalls mit Druck beaufschlagt wird.

15. Verfahren nach Anspruch 1, 2 oder 3, **dadurch gekennzeichnet, dass** das beim Kondensationsprozess (6, 7) anfallende CO₂ (13) separat aufgefangen wird.

16. Verfahren nach Anspruch 1 oder 3, **dadurch gekennzeichnet, dass** zur Wasserpurifikation ein Verdampfer/Kondensatorprozess (14) eingesetzt wird.

17. Verfahren nach Anspruch 1, 3 oder 16, **dadurch gekennzeichnet, dass** dem Verdampfer/Kondensatorprozess eine Aktivkohlefiltration (15) nachgeschaltet und/oder zwischengeschaltet wird.

18. Verfahren nach Anspruch 1, 3 oder 16, **dadurch gekennzeichnet, dass** für den Verdampferprozess der Purifikation (14) die Abwärme (29, 30) der Hochtemperatur-Brennstoffzelle (1) genutzt wird.

19. Verfahren nach Anspruch 1, 3 oder 16, **dadurch gekennzeichnet, dass** für den Kondensationsprozess der Purifikation als Kühlmedium (27, 28) einer der beiden in der Brennstoffzelle verwendeten Brennstoffe (z. B. Luft (4)) verwendet wird.

20. Verfahren nach Anspruch 1 oder 17, **dadurch gekennzeichnet, dass** zur Regenerierung der Aktivkohle Filter die Abwärme (29, 30) der Hochtemperatur-Brennstoffzelle (1) genutzt wird.

21. Verfahren nach Anspruch 1, 16 oder 17, **dadurch gekennzeichnet, dass** das Wasser nach dem Purifiktionsprozess keimfrei, fungienfrei und frei von Salzen ist.

22. Verfahren nach Anspruch 1, 16, 17 oder 21, **dadurch gekennzeichnet, dass** dieses Wasser in einem Puffertank (16) zwischengespeichert wird.

23. Verfahren nach Anspruch 1 oder 21, **dadurch gekennzeichnet, dass** dieses Wasser in die Systeme für Luftbefeuchtung/Klimatisierung (20), WC-Spülung (22) und Trinkwasser / Duschwasser / Waschwasser (17, 18, 19, 21) verteilt wird.

24. Verfahren nach Anspruch 1 oder 23, **dadurch gekennzeichnet, dass** zur Trinkwasser-, Duschwasser- und Waschwassererzeugung dieses Wasser mit denen für den menschlichen Verzehr notwendigen Salzanteilen angereichert wird (17).

25. Verfahren nach Anspruch 1, 23 oder 24, **dadurch gekennzeichnet, dass** dem Aufsalzungsprozess (17) eine Messvorrichtung (18) zur Ermittlung der Wasserqualität nachgeschaltet wird.

26. Verfahren nach Anspruch 1 oder 25, **dadurch gekennzeichnet, dass** der Salzgehalt des Wassers über die Leitfähigkeit des Wassers ermittelt wird (18).

27. Verfahren nach Anspruch 1, 24 oder 25, **dadurch gekennzeichnet, dass** die Messvorrichtung (18) mit dem Aufsalzungsprozess (17) rückgekoppelt (19) ist.

28. Verfahren nach Anspruch 1 oder 27, **dadurch gekennzeichnet, dass** der Aufsalzungsprozess (17) über die Rückkopplung (18, 19) mengenabhängig und automatisiert wird.

29. Verfahren nach Anspruch 1, 24 oder 28, **dadurch gekennzeichnet, dass** bei dem Wasser nach dem Aufsalzungsprozess die Anforderungen an Trinkwasser gemäß den nationalen und/oder internationalen Trinkwasserverordnungen erfüllt werden.

## Claims

1. A method for water treatment and distribution of on-board produced water in aircraft, land vehicles and/or watercraft, which may preferably also be used in autonomous stationary apparatuses, using a combined process comprising a high-temperature fuel cell (1) and a turbine in the temperature range > 500°C, having a reformer process (2) integrated directly into the fuel cell and operated with the fuel cell process heat for using hydrocarbons as fuel together with apportioning of grey and/or fresh water (26) and a water purification process (14, 15) operated with the process heat from the fuel cell together with water distribution (20, 21, 22) and a self-regulating water salination unit (17).

2. A method according to claim 1, **characterised in that** a high-temperature fuel cell (1) of the oxide ceramic fuel cell (SOFC) or molten carbonate fuel cell (MCFC) type or a comparable type with regard to temperature range is used for water production.

3. A method according to claim 1 or claim 2, **characterised in that** the high-temperature fuel cell (1) is followed by a condensation process (6, 7) for the waste gas (5), which condenses water out of the waste gases from the fuel cell.

4. A method according to claim 1, 2 or 3, **characterised in that** at least one stage of the condensation process consists of a turbine with one or more turbine stages (6) or of one or more mutually separated turbines with any desired number of turbine stages.

5. A method according to claim 1, 2 or 3, **characterised in that** at least one stage of the condensation process is performed with a heat exchanger (7) downstream of a turbine.

6. A method according to claim 1, 2, 3 or 5, **characterised in that** one of the two fuels (e.g. air 4) used in the fuel cell is used as the cooling medium (27, 28) of the heat exchanger (7).

7. A method according to claim 1 or claim 2, **characterised in that** at least one of the two fuels (3, 4) (e.g. air) used in the fuel cell (1) is preheated by the process heat from the fuel cell and/or propellant fractions supplied in liquid form are vaporised.

8. A method according to claim 1, 2 or 7, **characterised in that** the preheating of the fuels takes place in a fuel cell cooler (11), which partially or completely surrounds the fuel cell.

9. A method according to claim 1 or claim 2, **characterised in that** the internal reformer process (2) for fuel treatment is so designed that atomic or molecular hydrogen is produced with the process heat from the high-temperature fuel cell (1), which hydrogen is used on the one hand in the high-temperature fuel cell (1) itself for energy and water production and/or is partially diverted and supplied for example via a molecular filter to a different consumer (for example a membrane fuel cell (PEMFC)).

10. A method according to claim 1, 2 or 9, **characterised in that** fresh water is also supplied to the internal reformer process (2) instead of grey water (26), which fresh water is either made available externally or taken from the fuel cell condensate.

11. A method according to claim 1, 2 or 4, **characterised in that** one or more turbine stages are coupled to a compressed air compressor (8).

12. A method according to claim 1, 2 or 11, **characterised in that** the compressed air compressor (8) is also operated by a motor (9).

13. A method according to claim 1, 2 or 12, **characterised in that** the motor (9) is connected to the compressed air compressor (8) via a coupling (10).

14. A method according to claim 1 or claim 2, **characterised in that** the fuel (3) is likewise pressurised.

15. A method according to claim 1, 2 or 3, **characterised in that** the CO₂ (13) arising during the condensation process (6, 7) is collected separately.

16. A method according to claim 1 or claim 3, **characterised in that** a vaporiser/condenser process (14) is used for water purification.

17. A method according to claim 1, 3 or 16, **characterised in that** activated carbon filtration (15) is connected downstream of and/or between the vaporiser/condenser process.

18. A method according to claim 1, 3 or 16, **characterised in that** the waste heat (29, 30) from the high-temperature fuel cell (1) is used for the purification vaporiser process (14).

19. A method according to claim 1, 3 or 16, **characterised in that** one of the two fuels (e.g. air (4)) used in the fuel cell is used as cooling medium (27, 28) for the purification condensation process.

20. A method according to claim 1 or claim 17, **characterised in that** the waste heat (29, 30) of the high-temperature fuel cell (1) is used to regenerate the activated carbon filter.

21. A method according to claim 1, 16 or 17, **characterised in that**, after the purification process, the water is germ-free, fungi-free and free from salts.

22. A method according to claim 1, 16, 17 or 21, **characterised in that** this water is intermediately stored in a buffer tank (16).

23. A method according to claim 1 or claim 21, **characterised in that** this water is distributed to the air humidifying/conditioning (20), WC flushing (22) and drinking water/shower water/washing water (17, 18, 19, 21) systems.

24. A method according to claim 1 or claim 23, **characterised in that**, to produce drinking water, shower water and washing water, this water is enriched with the salt fractions necessary for human consumption (17).

25. A method according to claim 1, 23 or 24, **characterised in that** a measuring device (18) for determining water quality is connected downstream of the salination process (17).

26. A method according to claim 1 or claim 25, **characterised in that** the salt content of the water is determined by means of the conductivity of the water (18).

27. A method according to claim 1, 24 or 25, **characterised in that** the measuring device (18) feeds back (19) to the salination process (17).

28. A method according to claim 1 or claim 27, **characterised in that** the feedback (18, 19) renders the salination process (17) quantity-dependent and automated.

29. A method according to claim 1, 24 or 28, **characterised in that**, after the salination process, the water fulfils the drinking water requirements according to national and/or international drinking water regulations.

## Revendications

1. Procédé de traitement et de distribution d'eau générée à bord d'un véhicule aérien, terrestre et/ou aquatique et pouvant également être utilisé avantageusement dans des installations autonomes stationnaires, ce procédé combinant un processus combiné basé sur une cellule de combustible à haute température (1) et une turbine à une température dépassant 500° C, un procédé de reformage (2) intégré directement à la cellule (1) et actionné par la température du process de cette cellule pour utiliser des hydrocarbures comme combustible, une addition dosée d'eau brute et/ou d'eau fraîche (26) et un procédé de purification (2) actionné par la température du process de la cellule du combustible ainsi qu'une distribution d'eau (21, 22) et une unité de salage d'eau (17) autorégulée.

2. Procédé selon la revendication 1,**caractérisé en ce que** pour produire l'eau on utilise une cellule de combustible à haute température (1) du type à céramique oxydée (SOFC) ou du type à carbonate fondu (MCFC) ou d'un type dont le spectre de température est comparable.

3. Procédé selon la revendication 1 ou 2, **caractérisé en ce qu'**en aval de la cellule de combustible à haute température (1), a lieu un processus de condensation (6, 7) des gaz d'échappement (5) de la cellule, entraînant la condensation de l'eau contenue dans ces gaz.

4. Procédé selon une des revendications 1, 2 ou 3, **caractérisé en ce qu'**au moins un étage du processus de condensation est composé d'une turbine à un ou plusieurs étages (6) ou d'une ou plusieurs turbines séparées avec un nombre quelconque d'étages.

5. Procédé selon la revendication 1, 2 ou 3, **caractérisé en ce qu'**au moins une étape du processus de condensation est réalisée au moyen d'un échangeur thermique (7) monté en aval d'une turbine.

6. Procédé selon la revendication 1, 2, 3 ou 5, **caractérisé en ce que** comme agent de refroidissement (27, 28), de l'échangeur thermique (7), est utilisé un des deux combustibles (par exemple de l'air 4) alimentant la cellule de combustible.

7. Procédé selon la revendication 1 ou 2, **caractérisé en ce qu'**au moins un des deux combustibles (3, 4) (par exemple de l'air) utilisés dans la cellule à combustible (1) est préchauffé par la chaleur du process réalisé dans la cellule et/ou des fractions du carburant moteur amenées à l'état liquide sont vaporisées.

8. Procédé selon la revendication 1, 2 ou 7, **caractérisé en ce que** le préchauffage des combustibles a lieu dans un refroidisseur de combustibles (11), qui entoure en partie ou totalement la cellule de combustible.

9. Procédé selon la revendication 1 ou 2, **caractérisé en ce que** le procédé interne de reformage (2) destiné à préparer le combustible est conçu de manière que la chaleur de process de la cellule de combustible à haute température (1) produit de l'hydrogène à l'état atomique ou moléculaire, qui de son côté est utilisé dans la cellule (1) elle-même pour produire de l'énergie et de l'eau, et/ou est dérivé partiellement et amené par exemple à travers un filtre moléculaire à un utilisateur d'un autre genre (par exemple une cellule à combustible à membrane (PEMFC)).

10. Procédé selon la revendication 1, 2 ou 9, **caractérisé en ce qu'**au process interne de reformage (2) est amenée à la place d'eau brute (26) de l'eau fraîche disponible extérieurement ou prélevée dans le condensat de la cellule à combustible.

11. Procédé selon la revendication 1, 2 ou 4, **caractérisé en ce qu'**un ou plusieurs étages de turbine sont couplés à un compresseur à air (8).

12. Procédé selon la revendication 1, 2 ou 11, **caractérisé en ce que** le compresseur d'air (8) est entraîné par un moteur (9).

13. Procédé selon la revendication 1, 2 ou 12, **caractérisé en ce que** le moteur (9) est relié par un accouplement (10) au compresseur d'air (8).

14. Procédé selon la revendication 1 ou 2, **caractérisé en ce que** le combustible (3) est également sous pression.

15. Procédé selon la revendication 1, 2 ou 3, **caractérisé en ce que** le CO₂ (13) produit dans le process de condensation (6, 7) est recueilli de manière séparée.

16. Procédé selon la revendication 1 ou 3, **caractérisé en ce qu'**un processus de condensation/vaporisation (14) est utilisé pour purifier l'eau.

17. Procédé selon la revendication 1, 3 ou 16, **caractérisé en ce qu'**une filtration à charbon actif (15) suit le processus de vaporisation/condensation ou est intercalée.

18. Procédé selon la revendication 1, 3 ou 16, **caractérisé en ce que** pour le processus de vaporisation destiné à la purification (14), on utilise la chaleur (29, 30) produite par la cellule de combustible à haute température (1).

19. Procédé selon la revendication 1, 3 ou 16, **caractérisé en ce que** pour le processus de vaporisation destiné à la purification (14), on utilise comme agent de refroidissement un des deux combustibles (par exemple de l'air (4)) utilisés dans la cellule à combustible.

20. Procédé selon la revendication 1 ou 17, **caractérisé en ce que** pour régénérer les filtres à charbon actif, on utilise la chaleur (29, 30) produite par la cellule à combustible à haute température (1).

21. Procédé selon la revendication 1, 16 ou 17, **caractérisé en ce que** l'eau après le processus de purification est dépourvue de germes, de champignons et de sels.

22. Procédé selon la revendication 1, 16, 17 ou 21, **caractérisé en ce que** cette eau est stockée temporairement dans un réservoir tampon (16).

23. Procédé selon la revendication 1 ou 21, **caractérisé en ce que** cette eau est répartie et utilisée dans le système de climatisation/humidification de l'air (20), comme eau de rinçage des WC (22) et comme eau potable/eau de douche/eau de lavage (17, 18, 19, 21).

24. Procédé selon la revendication 1 ou 23, **caractérisé en ce que** l'eau, pour être utilisée en tant qu'eau potable/eau de douche/eau de lavage est enrichie en sels nécessaires à la consommation humaine.

25. Procédé selon la revendication 1, 23 ou 24, **caractérisé en ce qu'**en aval du processus d'addition de sels (17), est monté un dispositif de mesure (18) pour déterminer la qualité de l'eau.

26. Procédé selon la revendication 1 ou 25, **caractérisé en ce que** la teneur en sels de l'eau est déterminée par sa conductibilité.

27. Procédé selon la revendication 1, 24 ou 25, **caractérisé en ce que** le dispositif de mesure (18) est en rétroaction (19) avec le processus d'addition de sels (17).

28. Procédé selon la revendication 1 ou 27, **caractérisé en ce que** le processus d'addition de sels (17) est automatisé par la rétroaction (18, 19) en fonction du débit.

29. Procédé selon la revendication 1, 24 ou 28, **caractérisé en ce que** l'eau, après le processus d'addition de sels, satisfait les exigences concernant l'eau potable, telles que définies par les règlements nationaux et/ou internationaux.
